# EUROPÄISCHE PATENTANMELDUNG

(11) **EP 1 530 153 A1**
(43) Veröffentlichungstag der Anmeldung: **11.05.2005**
(21) Anmeldenummer: 04021397.7
(22) Anmeldetag: 09.09.2004
(51) Int. Cl.: G06K 19/077

(54) **Verfahren zur Herstellung einer Chipkarte und Chipkarte**

(30) Priorität: 07.11.2003 DE 10352477
(71) Anmelder: Novacard Informationssysteme GmbH, 26135 Oldenburg (DE)
(72) Erfinder: Laude, Guntram, 28816 Stuhr (DE)
(74) Vertreter: Siekmann, Gunnar, Dipl.-Phys.

(57) **Zusammenfassung**

Bei einem Verfahren zur Herstellung einer Chipkarte (1) mit einem Chipmodul (2) und einer Antenne (4), insbesondere einer Leiterschleife, bei dem mindestens eine elektrisch leitende Verbindung zwischen dem Chipmodul (2) und der Antenne (4) hergestellt wird, wird erfindungsgemäß die Verbindung von Chipmodul (2) und Antenne (4) durch mindestens eine Öffnung (15,16) in der dem Chipmodul (2) gegenüberliegenden Seite der Chipkarte (1) bearbeitet. Dadurch kann eine besonders zuverlässige Verbindung von Antenne (4) und Chipmodul (2) erreicht werden.

## Beschreibung

Die Erfindung betrifft ein Verfahren zur Herstellung einer Chipkarte mit einem Chipmodul und einer Antenne, insbesondere einer Leiterschleife, bei dem mindestens eine elektrisch leitende Verbindung zwischen dem Chipmodul und der Antenne hergestellt wird.

Chipkarten, die neben einem Chipmodul zur kontaktbehafteten Verbindung mit einem Lesegerät auch eine Antenne zur kontaktlosen Auslesung des Chips aufweisen, werden auch als Dual-Interface-Karten bezeichnet. Bei der Herstellung solcher Karten wird üblicherweise eine Antenne in eine definierte Kartenebene einlaminiert. In den fertigen Kartenkörper wird dann, ähnlich der Herstellung kontaktbehafteter Chipkarten, ein Chipmodul implantiert. Im Unterschied zur einfachen kontaktbehafteten Karte wird dabei neben der mechanischen Befestigung des Moduls in den Kartenkörper zusätzlich eine elektrische Kontaktierung des Chipmoduls mit den Antennenanschlußflächen hergestellt. Hierfür sind verschiedene Verfahren vorgeschlagen worden, wobei ein Problem darin besteht, eine dauerhafte, mechanisch zuverlässige und elektrisch leitende Verbindung zwischen dem Chipmodul und den Antennenanschlußflächen herzustellen, die auch bei mechanischen Belastungen und Verbiegungen der Chipkarte zuverlässig hält. So wurde in der DE 101 05 069 C2 vorgeschlagen, ein zusätzliches Kopplungselement zu verwenden. Die DE 197 28 993 C1 schlägt eine Kontaktierung mit einem Stift vor, der mit einem Ende die Kontaktflächen des Chipmoduls und mit dem anderen Ende die Kontaktflächen der Antenne kontaktiert.

Der Erfindung liegt die Aufgabe zugrunde, ein Verfahren und eine Chipkarte der eingangs genannten Art bereitzustellen, mit denen eine besonders zuverlässige und mechanisch belastbare Kontaktierung des Chipmoduls mit der Antenne möglich ist.

Die Lösung dieser Aufgabe erfolgt mit einem Verfahren mit den Merkmalen des Patentanspruchs 1. Bevorzugte Weiterbildungen der Erfindung sind in den Unteransprüchen angegeben. Bei einem Verfahren zur Herstellung einer Chipkarte mit einem Chipmodul und einer Antenne, insbesondere einer Leiterschleife, bei dem mindestens eine elektrisch leitende Verbindung zwischen dem Chipmodul und der Antenne hergestellt wird, ist es erfindungswesentlich, daß die Verbindung von Chipmodul und Antenne durch mindestens eine Öffnung in der dem Chipmodul gegenüberliegenden Seite der Chipkarte bearbeitet wird. Dadurch werden die Anschlußflächen der Antenne besonders gut erreichbar, und es ist möglich, eine besonders zuverlässige Verbindung herzustellen.

Bevorzugt wird bei der Herstellung der Chipkarte die Antenne in einer definierten Ebene der Chipkarte eingebracht, insbesondere laminiert, und auf einer Seite der Chipkarte wird eine Ausnehmung zur Aufnahme des Chipmoduls hergestellt, wobei die Anschlußflächen freigelegt werden.

In einer anderen, besonders bevorzugten Ausführungsform der Erfindung werden auf der dem Modul gegenüberliegenden oder der dem Modul abgewandten Seite der Chipkarte bzw. des Kartenkörpers eine oder mehrere, bevorzugt zwei Öffnungen hergestellt. Die Öffnungen können auch als Ausnehmungen oder Kavitäten bezeichnet werden. Bevorzugt wird für jede zu kontaktierende Anschlußfläche eine Ausnehmung oder Kavität hergestellt. Die Ausnehmung oder Kavität führt bis zur Anschlußfläche und legt dabei das Antennenmaterial im Bereich der Anschlußfläche frei. Die Größe der Ausnehmung bzw. der Durchmesser der Ausnehmung entspricht etwa der Fläche der herzustellenden Verbindung und ist außerdem an die einzuführenden Werkzeuge angepaßt. Die Ausnehmung ist bevorzugt kreisförmig.

Bevorzugt wird das Chipmodul vor dem Einsetzen präpariert. Insbesondere wird die Rückseite des Chipmoduls mit Hotmelt versehen, wobei die Anschlußflächen des Chipmoduls beim Bespuren mit Hotmelt ausgespart werden. Hotmelt ist vorzugsweise als doppelseitiges Klebeband ausgeführt, welches zunächst unter Temperatur und Druck auf die Chipmodulunterseite laminiert wird, wobei die Vergußmasse ausgespart wird. Das Hotmelt schmilzt beim Implantationsprozeß erneut auf und ermöglicht die mechanische Befestigung des Chipmoduls in der Chipkarte. Alternativ, also anstelle des Hotmelts, kann das Chipmodul auch kaltgeklebt werden, wobei ein fluides Klebstoffsystem, vorzugsweise Cyan Acrylat, verwendet wird, welches unmittelbar vor dem Implantationsprozeß in die Ausnehmung des Chipmoduls an verschiedenen Punkten auf die Montagefläche dispensiert wird.

In einer anderen bevorzugten Ausgestaltung der Erfindung erfolgt im Anschluß an die Präparationen der Chipkarte und nach der Präparation des Chipmoduls (eventuell auch unter Auslassung dieses letzten Schrittes) ein Dispensionsschritt. Dabei wird bei der Verbindung von Chipmodul und Antenne mit Lotpaste diese vor der Implantation auf die Antennenanschlußflächen dispensiert.

In einer anderen besonders bevorzugten Ausführungsform der Erfindung wird Lot durch die für das Chipmodul geschaffene Ausnehmung auf die freigelegten Antennenanschlußflächen aufgebracht. Bevorzugt wird dann Wärmeenergie durch die auf der modulabgewandten Seite geschaffenen Ausnehmungen eingebracht, insbesondere direkt auf das Antennenmaterial. Mit der eingebrachten Wärmeenergie wird also bevorzugt nicht direkt das Lot, sondern zunächst das Antennenmaterial erhitzt und damit das Lot indirekt erhitzt und aufgeschmolzen. In einer bevorzugten Ausgestaltung wird hierzu ein durch die Ausnehmungen oder Öffnungen gerichteter Laserstrahl verwendet. Bei Verwendung von Lot wird das Chipmodul bevorzugt zunächst nur in der Kavität geheftet. Dadurch wird dem Lot die freie Einstellung des Lötspaltes ermöglicht. Die eigentliche Befestigung wird dann im Anschluß an den Kontaktierungsprozeß mit einem Heizstempel durchgeführt.

In einer anderen bevorzugten Ausführungsform der Erfindung erfolgt die Kontaktierung des Chipmoduls mit der Antenne durch Schweißen. Bevorzugt wird dazu ein Werkzeug, beispielsweise eine Sonotrode oder Thermode, durch die auf der modulabgewandten Seite geschaffene Öffnung direkt auf die Anschlußflächen des Antennenmaterials geführt.

In einer weiteren bevorzugten Ausführungsform der Erfindung werden die auf der modulabgewandten Seite geschaffenen Öffnungen nach Abschluß des Kontaktierungsprozesses wieder geschlossen. Dies erfolgt in einer bevorzugten Ausführungsform dadurch, daß die Öffnungen mit einem Füllstoff, beispielsweise einem Pulver oder Fluid, verschlossen werden. In einer anderen Verfahrensvariante werden die Öffnungen mit einem Füllkörper verschlossen. Ein solcher Füllkörper wird entsprechend der Abmessungen der Öffnungen dimensioniert und dann eingebracht und insbesondere dort eingeklebt. Bevorzugt wird die wiederverschlossene Fläche zum Zwecke der Nivellierung und des Verschmelzens der Randzonen mit einem Werkzeug nachbehandelt. Hierzu kann insbesondere ein Heizstempel und/oder ein Prägestempel zum Einsatz kommen.

Ein weiterer Aspekt der Erfindung besteht in der Bereitstellung eines Kartenkörpers zur Verwendung in dem oben beschriebenen Verfahren. Ein solcher Kartenkörper zeichnet sich dadurch aus, daß in ihm eine Kavität zur Aufnahme eines Chipmoduls vorgesehen ist und daß auf der dieser Kavität gegenüberliegenden Seite mindestens eine auf Anschlußflächen der Antenne ausgerichtete Öffnung vorgesehen ist. Ein derart vorbereiteter Kartenkörper kann besonders günstig in dem erfindungsgemäßen Verfahren eingesetzt werden. Ein weiterer Aspekt der Erfindung besteht in der Bereitstellung einer Chipkarte, insbesondere einer nach dem erfindungsgemäßen Verfahren hergestellten Chipkarte, die ein Chipmodul und eine Antenne aufweist und sich dadurch auszeichnet, daß die Chipkarte auf der dem Chipmodul gegenüberliegenden Seite mindestens eine Öffnung aufweist. Die Öffnung kann dabei auch wieder verschlossen sein. Entscheidend ist, daß eine solche Öffnung einmal vorhanden war. Insbesondere ist in dem im übrigen homogen ausgebildeten Kartenkörper der Chipkarte dann im Bereich der gefüllten Öffnung ein Füllmaterial vorzufinden, so daß dort eine Inhomogenität besteht.

Nachfolgend wird die Erfindung anhand eines in der Zeichnung dargestellten bevorzugten Ausführungsbeispiels weiter erläutert. Im einzelnen zeigen die schematischen Darstellungen in:
- Fig. 1:: eine Draufsicht auf eine Chipkarte;
- Fig. 2:: eine Seitenansicht der Chipkarte gemäß Fig. 1;
- Fig. 3:: eine vergrößerte Ansicht einer geschnittenen Seitenansicht der Chipkarte mit dem Chipmodul gemäß Fig. 2;
- Fig. 4:: einen Querschnitt durch eine Chipkarte während des erfindungsgemäßen Verfahrens, wobei die Antenne und das Chipmodul mit Lotpaste verbunden werden; und
- Fig. 5:: einen Querschnitt durch eine Chipkarte während des erfindungsgemäßen Verfahrens, wobei die Antenne und das Chipmodul miteinander verschweißt werden.

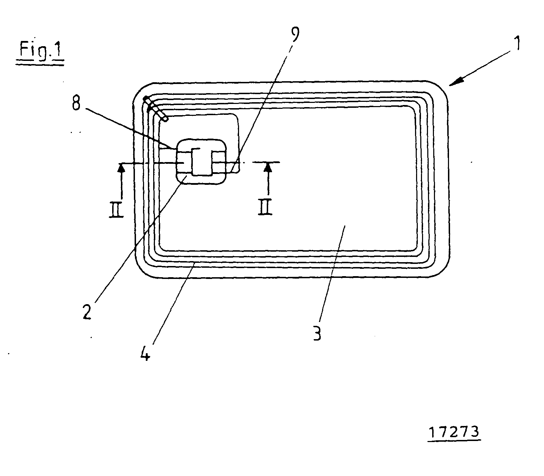

In Fig. 1 ist eine Draufsicht auf eine erfindungsgemäße Chipkarte 1 dargestellt. Die Chipkarte 1 weist im wesentlichen einen Kartenkörper 3 mit einem darauf angeordneten Chipmodul 2 auf. Im Randbereich des Kartenkörpers 3 ist eine Antenne 4 in Form einer umlaufenden Leiterschleife vorgesehen. Die Leiterschleife der Antenne 4 ist an zwei Punkten 8 und 9 zu dem Chipmodul 2 geführt und muß dort mit diesem verbunden sein. Dadurch wird eine Chipkarte 1 gebildet, die einerseits kontaktbehaftet über das Chipmodul 2 und andererseits kontaktlos über die Antenne 4 ausgelesen werden kann. Eine solche Karte wird auch als Dual-Interface-Karte bezeichnet.

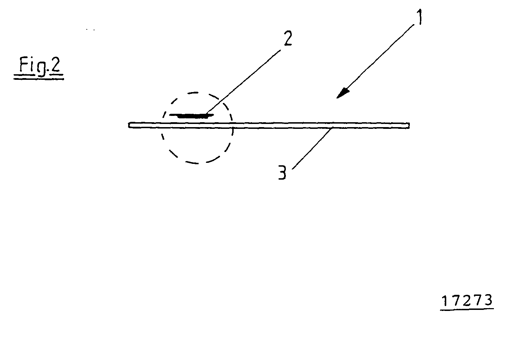

In Fig. 2 ist eine geschnittene Seitenansicht entlang der Linie II-II in Fig. 1 dargestellt. Das Chipmodul 2 ist hier oberhalb des Kartenkörpers 3 angeordnet bzw. kurz vor der Montage.

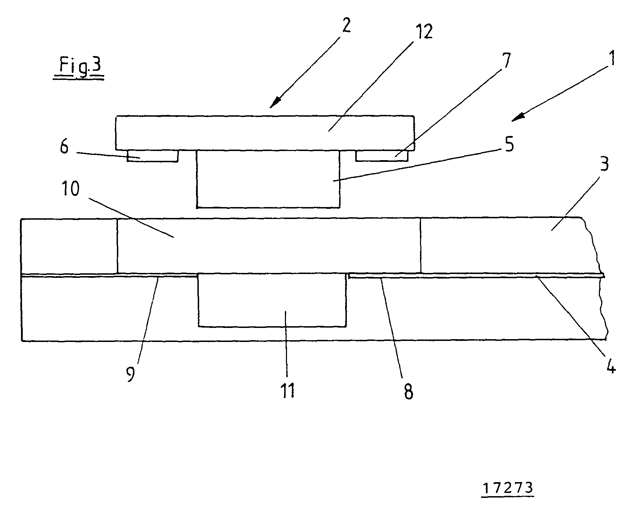

In Fig. 3 ist eine vergrößerte Darstellung des Chipmoduls mit dem darunter befindlichen Bereich der Chipkarte 1 gemäß Fig. 2 dargestellt. Man erkennt in der Darstellung der Fig. 3, daß die Antenne 4 etwa mittig im Kartenkörper 3 einlaminiert ist. Das Chipmodul 2 weist zum einen eine obere Chipfläche 12 auf, auf der die Ausleseflächen sind und im unteren Teil eine Vergußmasse 5. Weiterhin sind an der Unterseite der Chipfläche 12 Kontaktflächen 6 und 7 vorgesehen, die mit den Anschlußflächen 8 und 9 der Antenne 4 kontaktiert werden müssen. In Kartenkörper 3 der Chipkarte 1 ist eine große Ausnehmung oder Kavität 10 vorgesehen bzw. wird dort eingebracht, in der das Chipmodul 2 einschließlich der oberen Chipfläche 12 und der Vergußmasse 5 passend aufnehmbar ist. Die Kavität 10 weist dazu insbesondere einen Topf 11 auf, der in seinen Abmessungen an die Vergußmasse 5 des Chipmoduls 2 angepaßt ist.

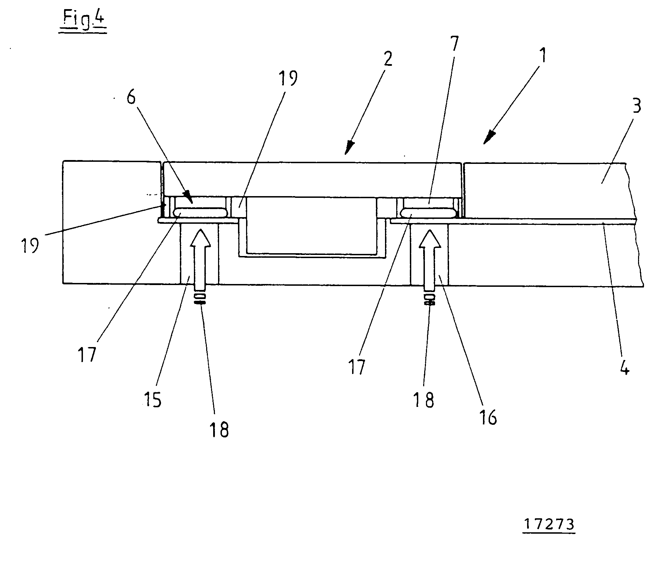

In Fig. 4 ist ein Querschnitt durch eine Chipkarte 1 während des erfindungsgemäßen Verfahrens dargestellt. Die Ansicht der Fig. 4 ist vergleichbar zur Ansicht der Fig. 3. Das Chipmodul 2 ist hier jedoch bereits in den Kartenkörper 3 der Chipkarte 1 eingesetzt. Vor dem Einsetzen des Chipmoduls 2 in den Kartenkörper 3 wird in die vorher in dem Kartenkörper 3 geschaffene Ausnehmung auf die Kontaktflächen 8 und 9 der Antenne 4 Lotpaste 17 aufgebracht. Das Chipmodul 2 wird dann in die Kavität eingesetzt und mit einem Klebstoffsystem 19 dort befestigt. Vor Einsetzen des Chipmoduls 2 sind auf der dem Chipmodul abgewandten Seite oder der gegenüberliegenden Seite Öffnungen 15 und 16 erzeugt worden, die bis zu den Kontaktflächen 8, 9 der Antenne 4 geführt sind. Durch diese Öffnungen 15, 16, wird dann Wärmeenergie zugeführt. Im gezeigten Ausführungsbeispiel erfolgt dies durch einen Laserstrahl 18. Dieser Laserstrahl 18 erhitzt die Anschlußflächen 8, 9 der Antenne 4 und damit indirekt die Lotpaste 17, so daß diese aufschmilzt und eine Verbindung mit den Kontaktflächen 6 und 7 des Chipmoduls 2 herstellt. Nach Abschluß des Kontaktierungsschrittes oder Verbindungsschrittes werden die Öffnungen 15 und 16 wieder geschlossen.

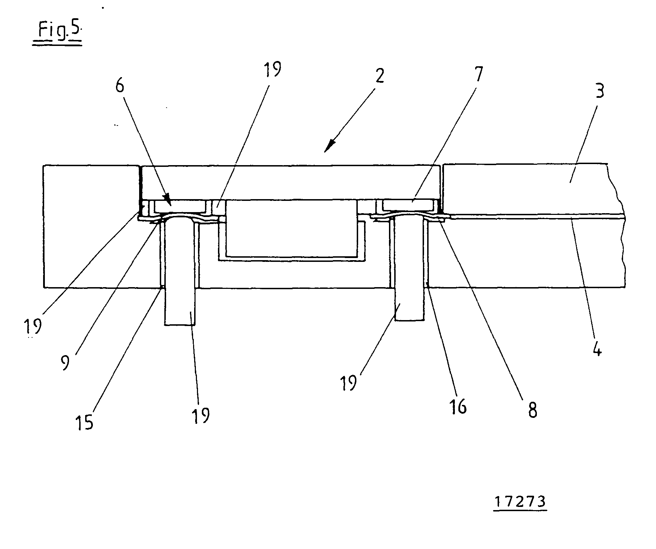

Der wesentliche Schritt eines alternativen Verfahrens ist in Fig. 5 dargestellt. Im Unterschied zu dem in Fig. 4 dargestellten Verfahren ist dort auf die Kontaktflächen 8, 9 der Antenne 4 keine Lotpaste aufgebracht. Das Chipmodul 2 grenzt mit seinen Kontaktflächen 6 und 7 direkt an die Anschlußflächen 8 und 9 der Antenne 4. Durch die rückwärtigen Öffnungen 15 und 16, die zu den Kontaktflächen 8 und 9 der Antenne 4 führen, werden Werkzeuge 19, beispielsweise Miniaturschweißköpfe (Thermoden) oder Miniaturultraschaltköpfe (Sonotroden) zugeführt, und damit werden die Kontaktflächen 8, 9 der Antenne 4 mit den Kontaktflächen 6, 7 des Chipmoduls 2 verschweißt. Nach Abschluß des Schweißvorganges werden die Öffnungen 15, 16 wieder geschlossen.

Im folgenden wird das Verfahren noch einmal ausführlich beschrieben.

In einem ersten Verfahrensschritt erfolgt die Präparation des Kartenkörpers. Dabei wird die Antenne in einer definierten Ebene in einen Kartenkörper laminiert. Für den Kartenkörper werden hauptsächlich thermoplastische Kunststoffe, wie zum Beispiel Polyvinylchlorid (PVC), Acrylnitril-Butadien-Styrol (ABS), Polycarbonat (PC) und Polyethylentherephthalat (PET) verwendet. In den Fällen, in denen Substrat und Kartenmaterial deutlich unterschiedliche Eigenschaften aufweisen, kommen sogenannte Haftvermittler zum Einsatz, mit denen mindestens einer der Verbindungspartner beschichtet wird. Nachdem die Antenne einlaminiert ist, wird die Kavität für das Modul hergestellt. Dabei müssen insbesondere die Anschlußflächen der Antenne freigelegt werden. Im nächsten Schritt wird bei der Präparation des Kartenkörpers die Öffnung oder die Öffnungen auf der modulabgewandten Seite des Kartenkörpers hergestellt. Das Antennenmaterial im Bereich der Anschlußflächen wird dabei freigelegt.

In einem nächsten Schritt erfolgt die Präparation des Chipmoduls. Dabei wird die mechanische Befestigung des Chipmoduls mit Hotmelt ausgeführt. Beim Bespuren des Chipmoduls mit Hotmelt müssen die Anschlußflächen ausgespart werden.

Danach wird Lotpaste auf die Antennenanschlußflächen dispensiert.

Im darauf folgenden Schritt wird das Chipmodul zunächst in die Chipkarte geheftet, um damit dem Lot die freie Einstellung des Lötspaltes zu ermöglichen. Im nächsten Schritt wird durch die Öffnungen von der modulabgewandten Seite Wärmeenergie zugeführt, insbesondere durch Laserlöten wird das Lot umgeschmolzen, und die Antennenanschlußflächen werden mit den Kontaktflächen des Chipmoduls verbunden. Danach wird das Chipmodul fertig implantiert.

Abschließend werden die Öffnungen oder Kavitäten auf der modulabgewandten Seite geschlossen. Dies erfolgt entweder dadurch, daß die Öffnungen mit einem Füllstoff, wie einem Pulver oder Fluid, verschlossen werden oder in die Öffnungen zunächst ein Klebstoff dispensiert wird und dann ein Füllkörper eingeklebt wird. Danach kann in beiden Fällen eine Nachbehandlung der wiederverschlossenen Fläche zum Zwecke der Nivellierung und dem Verschmelzen der Randzonen erfolgen.

In einer zweiten Prozeßvariante wird nach der Präparation des Kartenkörpers auf die Antennenanschlußflächen Lot dispensiert und außerdem ein Klebstoffsystem in die Öffnung oder Kavität für das Chipmodul dispensiert. Dabei ist eine weitergehende Präparation des Chipmoduls nicht notwendig. Nach dem Dispensieren des Klebstoffsystems kann das Chipmodul bereits fertig implantiert werden, und danach wird durch die Öffnungen auf der modulabgewandten Seite Wärmeenergie zugeführt, um das vorher von der modulzugewandten Seite dispensierte Lot umzuschmelzen. Abschließend werden die Öffnungen oder Kavitäten auf der modulabgewandten Seite wieder verschlossen.

In einer dritten Prozeßvariante wird nach der Präparation des Kartenkörpers das Chipmodul mit Hotmelt bespurt, wobei die Chipmodulanschlußflächen ausgespart werden. Bei dieser Variante ist ein Dispensieren von Lot oder von Klebstoff nicht notwendig. Nach dem Bespuren mit Hotmelt kann daher das Chipmodul bereits fertig implantiert werden, und danach werden durch Öffnungen auf der modulabgewandten Seite Werkzeuge direkt auf die Anschlußflächen der Antenne zugeführt und eine Verbindung hergestellt. Abschließend werden die Öffnungen oder Kavitäten auf der modulabgewandten Seite wieder verschlossen.

In einer vierten Verfahrensvariante wird nach der Präparation des Kartenkörpers ein Klebstoffsystem in die Öffnung für das Chipmodul dispensiert und das Chipmodul fertig implantiert. Danach werden durch die Öffnungen auf der modulabgewandten Seite Werkzeuge zugeführt und damit die Kontaktflächen des Chipmoduls mit den Anschlußflächen der Antenne verbunden. Abschließend werden die Öffnungen auf der modulabgewandten Seite wieder verschlossen.

## Patentansprüche

1. Verfahren zur Herstellung einer Chipkarte (1) mit einem Chipmodul (2) und einer Antenne (4), insbesondere einer Leiterschleife, bei dem mindestens eine elektrisch leitende Verbindung zwischen dem Chipmodul (2) und der Antenne (4) hergestellt wird,
**dadurch gekennzeichnet,**
**daß** die Verbindung von Chipmodul (2) und Antenne (4) durch mindestens eine in der dem Chipmodul (2) gegenüberliegenden Seite der Chipkarte (1) angeordnete Öffnung (15, 16) bearbeitet wird.

2. Verfahren nach Anspruch 1, **dadurch gekennzeichnet, daß** bei der Herstellung der Chipkarte (2) die Antenne (4) in einer definierten Ebene der Chipkarte (2) eingebracht wird.

3. Verfahren nach Anspruch 1, **dadurch gekennzeichnet, daß** in der dem Chipmodul (2) gegenüberliegenden Seite der Chipkarte (1) genau zwei Öffnungen (15, 16) hergestellt werden.

4. Verfahren nach einem der vorhergehenden Ansprüche, **dadurch gekennzeichnet, daß** die auf der modulabgewandten Seite herzustellenden Öffnungen (15, 16) bis zu Anschlußflächen (8, 9) der Antenne (4) hergestellt werden.

5. Verfahren nach einem der vorhergehenden Ansprüche, **dadurch gekennzeichnet, daß** das Chipmodul (2) vor dem Einsetzen präpariert wird.

6. Verfahren nach einem der vorhergehenden Ansprüche, **dadurch gekennzeichnet, daß** vor dem Einsetzen des Chipmoduls (2) Lot (17) und/oder Klebstoffsysteme in die Ausnehmung (10) für das Chipmodul (2) dispensiert werden.

7. Verfahren nach einem der vorhergehenden Ansprüche, **dadurch gekennzeichnet, daß** bei vorheriger Einbringung von Lot (17) durch die auf der modulabgewandten Seite geschaffenen Öffnungen (15, 16) Wärmeenergie zum Aufschmelzen des Lots (17) eingebracht wird.

8. Verfahren nach Anspruch 7, **dadurch gekennzeichnet, daß** das Chipmodul (2) zunächst in der Chipkarte (1) nur geheftet wird, um damit dem Lot (17) die freie Einstellung des Lötspaltes zu ermöglichen.

9. Verfahren nach einem der vorhergehenden Ansprüche, **dadurch gekennzeichnet, daß** durch die auf der modulabgewandten Seite vorgesehenen Öffnungen (15, 16) ein Werkzeug (19) zugeführt wird.

10. Verfahren nach Anspruch 9, **dadurch gekennzeichnet, daß** das Werkzeug (19) eine Sonotrode oder Thermode ist und direkt auf das Antennenmaterial geführt ist.

11. Verfahren nach einem der vorhergehenden Ansprüche, **dadurch gekennzeichnet, daß** abschließend die auf der modulabgewandten Seite erzeugten Öffnungen (15, 16) wieder verschlossen werden.

12. Verfahren nach Anspruch 11, **dadurch gekennzeichnet, daß** die Öffnungen (15, 16) mit einem Füllstoff verschlossen werden.

13. Verfahren nach Anspruch 12, **dadurch gekennzeichnet, daß** die Öffnungen (15, 16) mit einem Füllkörper verschlossen werden.

14. Verfahren nach einem der Ansprüche 11 bis 13, **dadurch gekennzeichnet, daß** die verschlossenen Öffnungen (15, 16) an der Oberfläche nachbehandelt werden.

15. Karten körper zur Verwendung in einem Verfahren nach einem der vorhergehenden Ansprüche, **dadurch gekennzeichnet, daß** in dem Kartenkörper eine Kavität (10) zur Aufnahme eines Chipmoduls (1) vorgesehen ist und daß auf der gegenüberliegenden Seite mindestens eine auf Anschlußflächen (8, 9) der Antenne (4) ausgerichtete Öffnung (15) vorgesehen ist.

16. Chipkarte mit einem Chipmodul (2) und einer Antenne (4), insbesondere einer Leiterschleife, mit einer elektrisch leitenden Verbindung zwischen dem Chipmodul (2) und der Antenne (4), insbesondere nach einem Verfahren nach einem der Ansprüche 1 bis 14 hergestellte Chipkarte, **dadurch gekennzeichnet, daß** die Chipkarte (1) auf der dem Chipmodul (2) gegenüberliegenden Seite mindestens eine Öffnung (15, 16) aufweist.

17. Chipkarte nach Anspruch 16, **dadurch gekennzeichnet, daß** die auf der modulabgewandten Seite vorgesehenen Öffnungen (15, 16) durch Einbringen von Füllstoffen oder Füllkörpern geschlossen sind.

18. Chipkarte nach einem der Ansprüche 16 oder 17, **dadurch gekennzeichnet, daß** die Chipkarte (1) einen homogen ausgebildeten Kartenkörper (3) aufweist, der im Bereich der gefüllten Öffnungen (15, 16) inhomogen ist.
